# EUROPÄISCHE PATENTSCHRIFT

(11) **EP 1 611 360 B1**
(45) Veröffentlichungstag und Bekanntmachung des Hinweises auf die Patenterteilung: **18.07.2007**
(21) Anmeldenummer: 04707529.6
(22) Anmeldetag: 03.02.2004
(51) Int. Cl.: F16B 13/00, F16B 13/06, F16B 13/12, F16B 13/02, B29D 1/00, B29C 45/00

(54) **PYRAMINDENDÜBEL**
PYRAMIDAL DOWEL
CHEVILLE PYRAMIDALE

(30) Priorität: 08.04.2003 DE 10316072
(43) Veröffentlichungstag der Anmeldung: 04.01.2006
(73) Patentinhaber: Creativ Power Anstalt, 9487 Bendern (LI)
(72) Erfinder: MAYER, Alfred, Friedrich, verstorben (DE)
(74) Vertreter: Schwarzensteiner, Marie-Luise
(86) Internationale Anmeldenummer: PCT/EP2004/000974
(87) Internationale Veröffentlichungsnummer: WO 2004/090351

(56) Entgegenhaltungen:
- CH-A- 320 677
- DE-A- 3 344 232
- DE-A- 19 938 842
- DE-B- 1 030 985
- GB-A- 1 495 645

## Beschreibung

Die vorliegende Erfindung betrifft ein vollkommen neuartiges Dübel-System auf Basis von Pyramiden-Elementen und daraus folgender physikalischer Pyramiden-Kraft mit Vollraum-Anpressdruck. Die Dübel bestehen einerseits aus thermoplastischen Kunststoffen, andererseits aus (zweckorientiert auch aus verschieden zusammengesetzten) kaltverformbaren Stoffen, weiteres aus Metall respektive Stahl, und, je nach Bedarf, aus Kombination dieser Stoffe.

Auch die verschiedenartigen Herstellungstechniken dieser stofflichen Ausgangssituation sind in der Dübeltechnik vollkommen neuartig (von der möglichen thermoplastischen Spritzgusstechnik abgesehen). Diese Herstellungstechniken eröffnen vollkommen neue Dimensionen und Perspektiven und bedeuten einen tiefgreifenden Umbruch in der Dübeltechnik.

Diese Dübel decken je nach Ausstattung/Ausführung sämtliche Lastenbereiche ab, vom kleinsten Mauerdübel bis zu Hochleistungs-Verankerungen im Tunnel-, Wasserkraftwerks-, Bergbau etc. Sie zeichnen sich weiters durch ein besonders niedriges Eindrehmoment und eine hohe Festdrehfixierung aus. Mit Ausnahme der Dübel aus Metall und Metallkombinationen haben die thermoplastisch sowie die kaltverformten Dübel die Eigenschaft, sich jedem Baustoff automatisch optimal anzupassen und auch in erweiterten Bohrlöchern einen vollen Anpressdruck zu gewährleisten. Dies wird durch den durch eine umfanggeschlossene Hautverbindung oder dergleichen Beabstandungen distanzierten Dübelkopf gegenüber dem Spreizabschnitt erreicht. Die Torsion setzt zuerst beim Dübelkopf ein und geht erst über die Distanzierungs-Freistellung auf die Pyramiden-Leisten des Spreizabschnittes (Spreizkörpers) über. Die Pyramidenleisten verwinden sich. Sie erreichen in erweiterten Bohrlöchern eine Drallspreizung und bilden in Hohlräumen eine rosettenartige Verknotung, in deren Zentrum sich der zurückgezögene Dübelkopf festdrehfixierend festsetzt.

Die am Halsrand befindlichen Lamellen verhindern einerseits zu tiefes Eindringen, also Verlust des Dübels im Bohrloch, sind andererseits kippbar und daher gleichzeitig für Vorsteck- und Durchsteckmontagen geeignet.

Allgemein wird in der Dübeltechnik bei Kunststoffdübeln der Spreizdruck bzw. Anpressdruck durch das Eindringen einer Schraube oder das Einschlagen eines Nagels in den im Bohrloch des Baustoffes plazierten Dübel hergestellt. Bei anderen Ausführungsformen von Dübeln ist der Dübelkopf so gestaltet und/oder mit dem Spreizabschnitt verbunden, dass der Dübelkopf beim Eindringen der Schraube in Richtung Bohrlocheingang zurückgezogen wird und damit den Spreizvorgang des Mittelteiles des Dübels unterstützt bzw. diesen in einem Hohlraum zu einer Rosette verknotet. In diesem Zusammenhang wird auf die DE 199 38 842 verwiesen. In der DE 100 64 093 wird eine Oberflächenstrukturierung für Dübel beschrieben, welche über die Spreizung hinaus, die Haftung des Dübels und damit dessen Auszugsfestigkeit aus dem Bohrloch erhöht.

Die GB-PS 1 495 645, DE-AS 1 030 985 und DE-A 199 38 842 beschreiben Dübel gemäß dem Oberbegriff von Anspruch 1.

Die Auszugsfestigkeit der oben genannten Dübel ist sehr gut. Dennoch ist es wünschenswert, die Presskraft, d.h. Andruckkraft des Dübels über dessen Oberfläche im Bohrloch zu steigern, wobei der Eindrehwiderstand entweder unverändert bleibt oder sogar weiter erniedrigt ist.

Aufgabe der vorliegenden Erfindung ist es daher, Ausführungsformen von Dübeln anzugeben, deren Andruckkraft im Bohrloch optimal ist, wobei gleichzeitig ein niedriger Eindringwiderstand für eine Schraube oder einen Nagel gewährleistet ist.

Gegenstand der vorliegenden Erfindung ist ein Dübel mit Dübelkopf, Spreizkörper und Dübelhals, der wenigstens über den Bereich seines Spreizkörpers aus wenigstens zwei sich längs erstreckenden Spreizkörpergliedern gebildet ist, wobei die Spreizkörperglieder elastisch miteinander verbunden sind und einen im Wesentlichen pyramidenstumpfförmigen. Querschnitt aufweisen, wobei die Basisflächen der Pyramidenstümpfe den Aussenumfang und deren Stumpfflächen den Innenumfang des Dübels bilden und die Spreizkörperglieder durch eine Vielzahl längs aneinander gereihter Pyramidenstümpfe gebildet sind.

Der erfindungsgemäße Dübel besitzt eine besonders hohe Druckkraft und damit eine besonderes hohe Haltekraft, d.h. Auszugsfestigkeit und weitere vorteilhafte Montageeigenschaften. Die Vorteile des erfindungsgemäßen Dübels ergeben sich aus dem Innenaufbau des Dübels in Form des pyramidenstumpfförmigen Querschnitts der Spreizkörperglieder, weil hier alle Druckkräfte, welche über die eingeführte Schraube oder einen Nagel auf die Stumpffläche wirken, maximal und gleichmäßig auf die Basisfläche der Pyramidenstümpfe und damit die Aussenfläche des Dübels übertragen werden.

Die Spreizkörperglieder selbst sind durch eine Vielzahl längs aneinander gereihte Pyramidenstümpfe gebildet. Obwohl somit in Längsrichtung des Dübels Freiräume bzw. Freistellungen ausgebildet sind, ist die Druckkraft, die sich von den Pyramidenstumpfflächen auf die Basisflächen verteilt, je nach Rohstoffen, im einfachsten Fall jedoch mindestens die gleiche wie bei dem vorher beschriebenen Dübel. Allerdings ist der Eindringwiderstand (Eindrehmoment) für eine einzuführende Schraube oder einen einzuführenden Nagel deutlich herabgesetzt, die Festdrehfixierung dagegen hoch.

Der erfindungsgemäße Dübel verfügt in vorteilhafter Weise über 3, 4, 5, 6, 7 oder 8 der zusammenhängenden Spreizkörperglieder. Besonders vorteilhaft für die geometrische Ausgestaltung sind 4 Spreizkörperglieder, weswegen die nachfolgenden Beispiele und Zeichnungen auf dieser Anzahl von Spreizkörpergliedern basieren, jedoch nicht darauf beschränkt sein sollen.

Die Pyramidenstümpfe können erfindungsgemäß bezüglich der Spreizkörperglieder parallel zueinander, aber auch auf Lücke versetzt angeordnet sein. Im letzteren Fall sind die in Längsrichtungen sich ausbildenden Freiräume bzw. Freistellungen reduziert, ohne den Eindringwiderstand negativ zu beeinflussen.

In einer weiteren erfindungsgemäßen Ausgestaltung sind die Pyramidenstümpfe innerhalb eines Spreizkörpergliedes jeweils mit einer Ecke der Basisfläche mit angrenzenden Pyramidenstümpfen verbunden. Auch bei dieser Ausführungsform können die Pyramidenstümpfe bezüglich der Spreizkörperglieder entweder parallel oder versetzt zueinander, also auf Lücke angeordnet sein. Damit lässt sich eine Variation der Merkmale Druckkraft und Eindringwiderstand erzielen.

In weiteren Ausführungsformen sind die Pyramidenstümpfe denkbarerweise innerhalb der Spreizkörperglieder gegebenenfalls doppelseitig gegenläufig zueinander angeordnet oder sie sind in den Spreizkörpergliedern derart angeordnet, dass sich ein spiralförmiger Verlauf ergibt.

In einer weiteren vorteilhaften Ausgestaltung des erfindungsgemäßen Dübels weisen die Pyramidenstümpfe in Längsrichtung eine unterschiedliche und/oder alternierende Höhe auf. Bei dieser Ausführungsform lassen sich in besonders einfacher Weise verschieden hohe Spreizeffekte und auch Effekte hinsichtlich der Zugfestigkeit und/oder verschiedene Verwindungseffekte in Hohlräumen erzielen. Es ist eine besonders gute Druckdosierung möglich. Beim Pyramidenstumpf liegt die durch die Abstumpfung entstehende Fläche normalerweise waagerecht gegenüber der Basisfläche. Wenn nun diese Stumpffläche in axialer Richtung mehr oder weniger schräg gestaltet wird, entsteht beim Einführen der Schraube ein der Schrägstellung entsprechender verschieden höherer, mit der Steilung ansteigender, sozusagen dosierter Druck auf die der Bohrlochwandung angepassten Grundfläche. Diese Dosierung wirkt sich im Falle einer solchen Gestaltgebung auch entsprechend auf die Spreizkraft, die auch hierdurch nach unten oder oben dosiert werden kann, aus. Damit geht auch ein herabgesetzter Eindrehwiderstand einher, welcher den Kraftaufwand beim Eindrehen einer Schraube oder beim Einschlagen eines Nagels vermindert. Ein Abreissen der Schraube, welches sich bei zu hohem Eindrehwiderstand ergeben könnte, wird verhindert. Die Montagezeit wird vermindert und damit die Montageleistung pro Zeiteinheit erhöht. Der Dübelrohstoffbedarf wird vermindert, die Produktionszeit verkürzt, die Transportkosten erniedrigt und die Lagerarbeit erleichtert.

Ähnliche Eigenschaften lassen sich mit einem erfindungsgemäßen Dübel erzielen, dessen Stumpffläche der Pyramidenstümpfe in Längsrichtung (axialer Richtung) des Dübels ansteigend abgeschrägt ist. Die Stumpffläche kann auch eine Zahnung aufweisen.

Bei einer weiteren Ausführungsform des erfindungsgemäßen Dübels ist es von Vorteil, wenn die Pyramidenstümpfe eines jeden Spreizkörpergliedes untereinander elastisch verbunden sind. Dadurch bilden sich im Bereich des Spreizkörpers gewissermaßen Leisten (mit Freistellungen) aus. Zwischen den Leisten befinden sich sehr schmale Schlitze, wodurch sich der Spreizkörper dem Spreizdruck der Schraube gemäß Ausweiten oder bei einer weiter unten beschriebenen besonderen Ausführungsform des Dübelkopfes zu einer Rosette verknoten kann. Das gilt jedoch nur für thermoplastisch oder im Kaltverfahren hergestellte Dübel.

Gemäß einer weiteren und besonders bevorzugten Ausführungsform der vorliegenden Erfindung ist jedes Spreizkörperglied über einen sich axial, radial oder schneckenförmig erstrekkenden Längssteg oder eine hautförmige Distanzierung mit dem Kopf des Dübels elastisch verbunden und hält diesen gleichzeitig von den Spreizkörpergliedern in Abstand, wobei der Kopf normalerweise ebenso viele Segmente bzw. Glieder aufweisen kann wie Spreizkörperglieder vorhanden sind. Dieser Kopf ist somit vom Spreizkörper durch eine größere Freistellung getrennt und besteht aus einem im Umfang geschlossenen Dübelkopf, beispielsweise ebenfalls aus Pyramidenstümpfen oder aus einem separaten Teilbereich mit angemessener Bohrung, die diesen Kopf in Hohlraum-Montagen zurückzieht und so zu rosettenartiger Verwindung bzw. Verknotung der Spreizkörperglieder führt. Diese Maßnahme verleiht dem Dübel über die Vollraumspreizung hinaus in weniger harten Baustoffen oder bei Bohrloch-Plustoleranzen eine zusätzliche Drallspreizung. Die Freistellung des Dübelkopfes vom Spreizkörper führt dazu, dass beim Eindrehen bzw. Weiterdrehen der Schraube zuerst der Kopf in Torsion versetzt wird und die Verwindung des Spreizkörpers erst danach folgt, wodurch sich eine unübertreffliche Feinabstimmung/Reaktion auf die unterschiedlichsten Baustoffe, Bohrlochtoleranzen, Baustoffkammern (z.B. Hohlziegel) und Hohlräume und damit in Verbindung einer sicheren, optimalen Haltekraft ergibt.

Weitere vorteilhafte Ausführungsformen ergeben sich aus den Unteransprüchen 15 bis 18, wonach der Dübel insgesamt beispielsweise als sogenannter Doppelstock-Dübel ausgebildet ist, der Dübelhals über eine Schraubeneinlaufschräge verfügt und feinst aufgerauht ist oder der Dübel auf seiner Aussenseite im Spreizkörperbereich sogenannte Zahnleisten, Lamellen, und/oder Krallzähne umfänglich und/oder in Längsrichtung aufweist. Anstelle der Zahnleisten, Lamellen und/oder Krallzähne kann auf der Aussenseite des Dübels auch eine Feinstziselierung in Form eines Fingerprints oder dergleichen Oberflächenstrukturierung vorgesehen sein.

Der Dübel insgesamt kann aus thermoplastischem Kunststoff und/oder unterschiedlichen Stoffen, die ohne Schmelzvorgang, also auf kaltem Wege zusammengefügt werden, und/oder Stahl bzw. Metall sowie aus Kombinationen dieser verschiedenen Stoffe gefertigt sein. Die Stahl- bzw. Metallausführung ist jedoch nur ohne Drallkörper möglich.

Die erfindungsgemäßen Kunststoffdübel lassen sich mit Hilfe thermoplastischer Herstellungstechniken anfertigen.

Es werden dabei zunächst Flachformen der Dübel erzeugt, die aus zueinander parallel verlaufenden Segmenten bestehen. Die einzelnen Segmente umfassen die Spreizkörperglieder, und die jeweiligen Hals- und Kopfstücke des Dübels. Die parallel zueinander ausgeformten Segmente lassen sich manuell oder maschinell zu einem Rundkörper aufrollen. Die jeweiligen Endsegmente der Dübel werden durch übliche Verbindungstechniken, wie Kleben, Heißkleben, Schmelzkleben, Lasern oder mittels Schnapp- oder Rastverbindungen oder durch Ringe oder Folien verbunden.

Die thermoplastische Herstellungstechnik kann ein geeignetes Spritzgußverfahren oder vorzugsweise ein geeignetes Extrusionsverfahren einsetzen. In vorteilhafter Weise wird der beim Strangpressen geschmolzene Rohstoff über eine Schneckenwelle in eine doppelseitige Form (z. B. Panzerketten-Werkzeugformen) gebracht, in welcher von der einen Seite die Aussenseite und von der anderen Seite die Innenseite des Dübels geformt bzw. gepresst wird.

Andererseits lassen sich die Flachformen der Dübel auch auf "kaltem Wege" erzeugen. Man geht davon von Faserbahnen aus, die chemisch beeinflusst oder behandelt werden. Die Faserbahnen bzw. -gelege können aus verschiedensten Materialien, zum Beispiel Glas-, Kohle- oder Keramikfasern oder -flocken bestehen, die mit Kunstharzen in einer Matrix angeordnet werden. Die Oberflächen können durch Besprühen, Bestrahlen, Bedampfen, Belegen, Beschichten, Berieseln, Bespülen, Bestreichen oder dergleichen modifiziert, beispielsweise metallisiert oder mechanisch oder chemisch u.a.m. behandelt werden. Aus diesen Bahnen können die Flachformen der Dübel beispielsweise ausgestanzt oder mittels Hochdruck-Mikro-Wasserstrahl oder Laser- oder ähnlichen Techniken ausgeformt werden.

Die thermoplastische Herstellung sowie die Kaltverformungstechnik sind in besonderem Maße für eine Fließband- bzw. Endlos-Fertigung geeignet. Diese Fertigungsmethode ermöglicht die Herstellung der Dübel in mehrfachen nebeneinander liegenden Streifen bzw. Bahnen. In der Längsrichtung werden die Dübel je nach Stücklänge (z. B. Mauerdübel, Rahmendübel etc.) mechanisch, thermisch, oder mittels Laser- oder Hochdruck-Wasserstrahl etc. vor oder nach der Umformung in Rundkörper getrennt. Durch diese Flachkörper-Fließtechnik ergeben sich besonders günstige, vielseitige konstruktive Gestaltungsmöglichkeiten sowie stark herabgesetzte Herstellungskosten. Auch bei der Herstellung der Metalldübel ist ein solches Verfahren in angepasster Form möglich und ratsam.

Zusammenfassend kann hierzu festgestellt werden:
1) Das flachkörpertechnische Extrusionsverfahren dieser neuartigen Kunststoffdübel beinhaltet auch die Möglichkeit, diese in Extrusion befindlichen Flachkörper in ihren oberen und/oder unteren und/oder seitlichen Flächen wahlweise oder unmittelbar gleichzeitig
   1.01: molekular durch Strahlenbeeinflussung auf Beschichtungen verschiedenster Art vollflächig oder streifenartig oder mit Absätzen stellenweise zu beeinflussen; weiter
   1.02: vollflächig oder streifenartig oder stellenweise metallisch und/oder (auch für die anschliessende Rundkörper-Formung) gleichzeitig durch Klebstoff zu beschichten, weiter bei Bedarf
   1.03: vollflächig oder streifenartig oder stellenweise andere Kunststoff-Qualitäten, z. B. auch netzartig, oder andere Stoffe, z. B. keramische, glas- oder kohlefaserige etc. in passender Form einzubringen.
2) Bei den Pyramiden-Stahldübeln, die ebenfalls in ihrer Ausgangslage in Flachkörperform zu produzieren sind, können bei Bedarf ebenfalls verschiedenste Stoffe gemäß 1) eingebracht werden.
3) Die flachkörpertechnische Ausgangslage bei thermoplastisch oder kalt verformten Dübeln wie auch Metall-Pyramidendübeln ermöglicht es, Pyramidendübel praktisch in beliebiger Größe herzustellen, also z. B. kleinste 4 mm starke, 25/30 mm lange Befestigungselemente, genau so beliebig große schwerste Betonverankerungen z. B. im Tunnelbau, Bergwerksbau, Wasserkraftwerksbau, Stollenbau, beispielsweise mit 300 mm Durchmesser und 3000 mm Länge, bei Bedarf über die gesamte Länge zum Beispiel vierseitig spreizend, und in allen Fällen eine absolut zentrische Schrauben- oder Nagel- oder Stiftführung und gleichmäßige, jeweils höchste Spreizkraft gewährleistend.

Im folgenden wird die Erfindung anhand der nachfolgenden Zeichnungen, welche jedoch den Umfang der Erfindung in keiner Weise beschränken sollen, erläutert. Darin zeigen:
- Fig. 1: eine Ausführungsform des erfindungsgemäßen Dübels im offenen Zustand,
- Fig. 2a, 2b und 2c: verschiedene Anordnungen von Pyramidenstümpfen in den Spreizkörpergliedern zueinander,
- Fig. 2d, 2e und 2f: einen Dübelflachkörper von Aussen sowie von Innen und einen zum Rundkörper geformten Dübel,
- Fig. 3a und 3b: jeweils Querschnitte von geschlossenen Dübeln einer Ausführungsform mit Klippverschlüssen,
- Fig. 4: eine weitere Ausführungsform eines erfindungsgemäßen Dübels in geschlossenem Zustand,
- Fig. 5: einen erfindungsgemäßen Dübel mit Automatikkopf in Funktion,
- Fig. 6: eine weitere Ausführungsform des erfindungsgemäßen Dübels,
- Fig. 7: eine noch weitere Ausführungsform des erfindungsgemäßen Dübels,
- Fig. 8: einen noch weiteren erfindungsgemäßen Dübel in Doppelstockausfertigung.

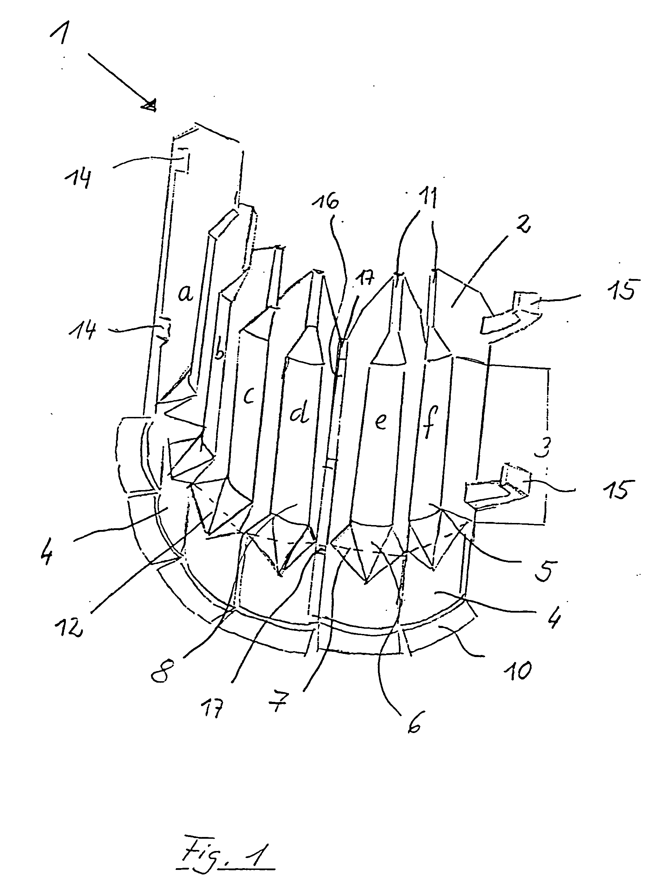

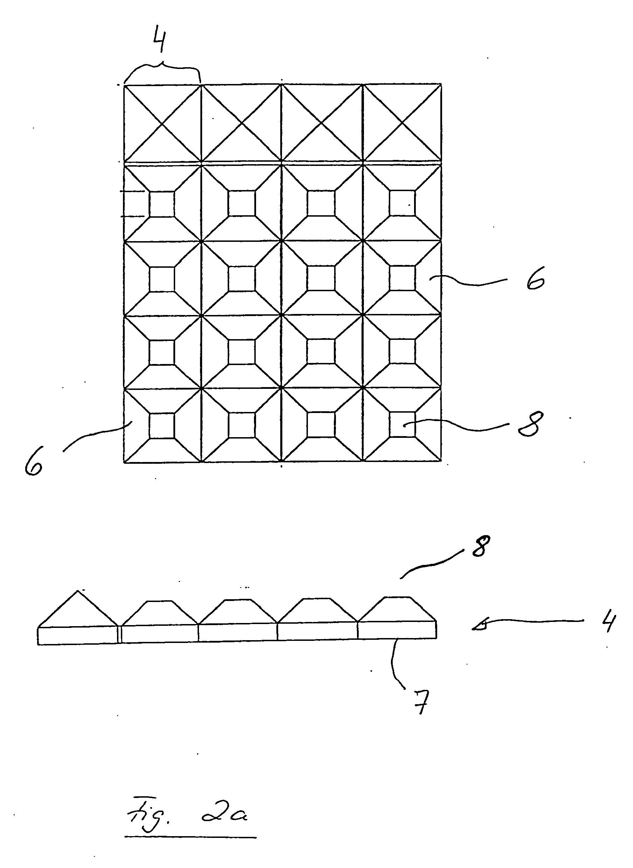

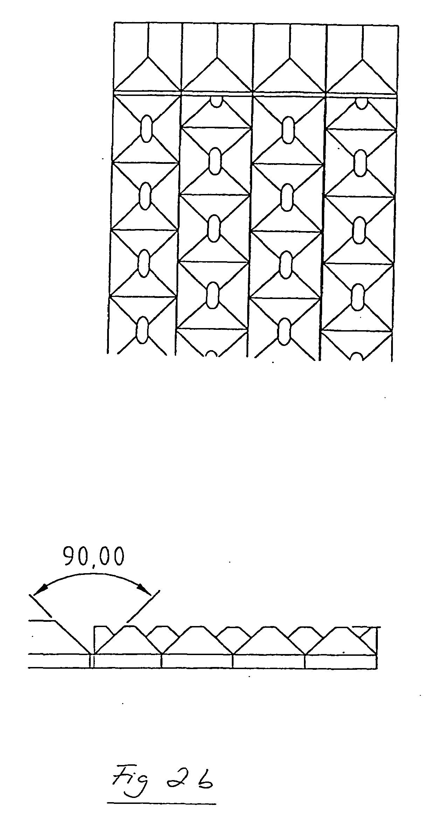

Fig. 1 zeigt einen erfindungsgemäß ausgestalteten Dübel 1 schematisch in offener Form, wie er beispielsweise aus einem Extrusionsverfahren hervorgeht. Der Dübel 1 ist aus sechs Segmenten a bis f aufgebaut, mit jeweils einem Kopf(abschnitt) 2, einem Spreizkörperabschnitt 3 und einem Hals(abschnitt) 4. Der Spreizkörperabschnitt 3 selbst wird aus sechs Spreizkörpergliedern 5 (a bis f) gebildet. Jedes Spreizkörperglied 5 (a bis f) weist einen pyramidenstumpfförmigen Querschnitt 6 auf, mit einer Basisfläche 7 und einer Stumpffläche 8. Bei der gezeigten Ausführungsform weisen sowohl das Spreizkörperglied 5 sowie der zugehörige Kopf 2 Pyramidenstumpfform auf. In den Kopfabschnitten 2 sind Schraubenführungsbohrungen 11 vorgesehen, in den Halsabschnitten 4 sind Schraubeneinlaufschrägen 12 ausgebildet. Am unteren Umfang der Halsabschnitte 4 sind lamellenartige Fortsätze 10 ausgebildet, welche, ist der Dübel in das Bohrloch eingesetzt, das Bohrloch außen umschließen, die sich aber bei Vor- und Durchsteckmontage umlegen (kippen) und ebenfalls in das Bohrloch bedarfsgemäß eindringen (z. B. bei Montage von Holz auf Beton, Ziegel, etc.)

Die einzelnen Spreizkörperglieder 5 bzw. Segmente (a bis f) können direkt aneinander ausgeformt sein, d.h. die Pyramidenstümpfe 6 sind direkt über ihre Basisflächen 7 miteinander verbunden. Bei der dargestellten, bevorzugten Ausführungsform sind die einzelnen Segmente bzw. Spreizkörperglieder 5 durch eine dünne filmartige Haut 16 verbunden. Diese Haut 16 kann durchgehend zwischen den Gliedern 5 ausgebildet sein. Bei einer bevorzugteren und dargestellten Ausführungsform sind diese Häute im Spreizkörperabschnitt 3 stärker und in Form von Stegen 17 ausgebildet. Solche Stege 17 können auch zur Beabstandung des Kopfes bzw. der Kopfsegmente von den eigentlichen Spreizkörpergliedern 5 verwendet werden (nicht gezeigt).

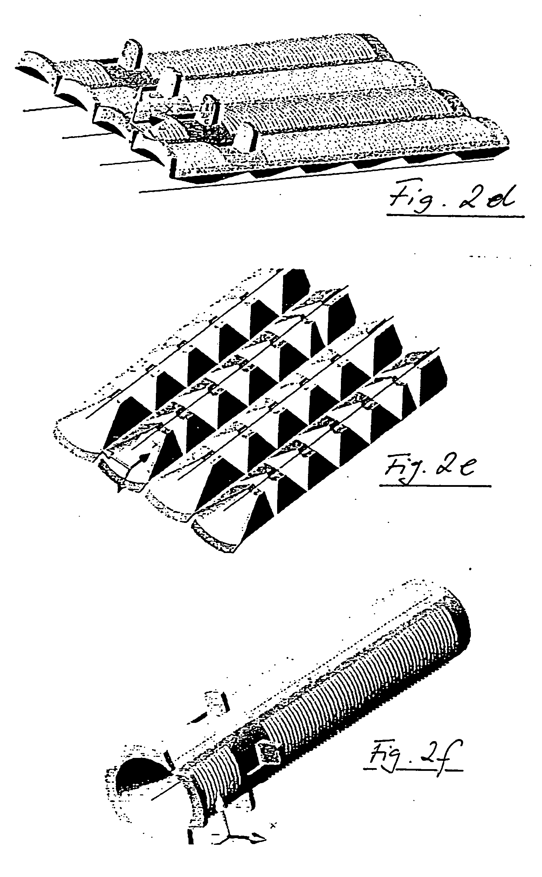

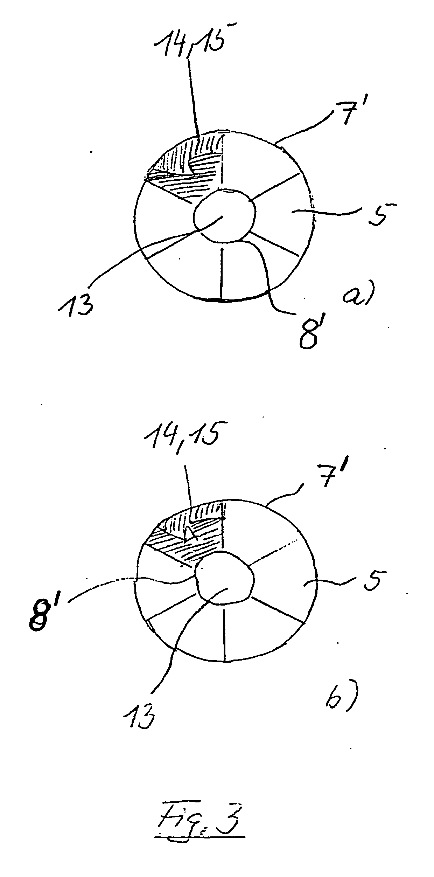

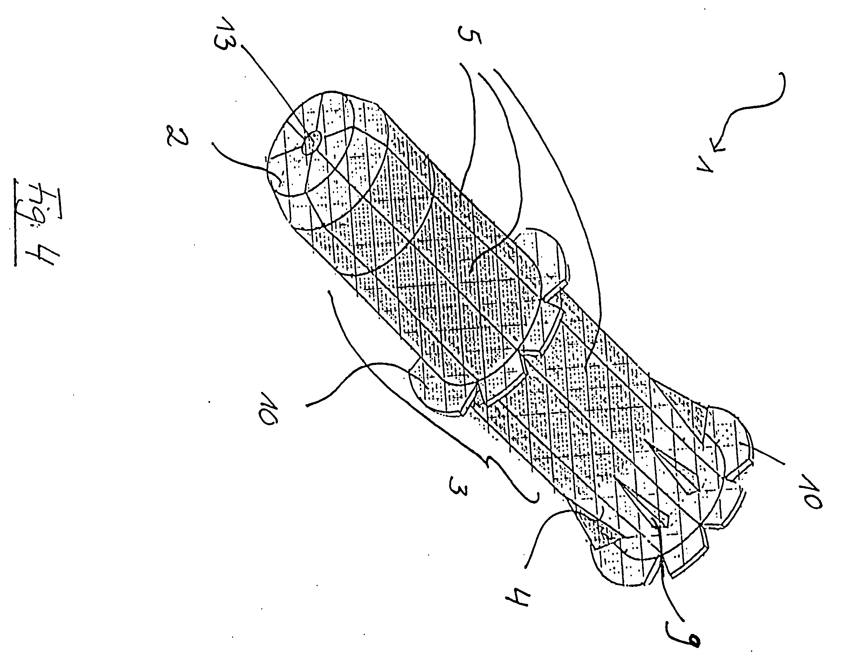

Bei der dargestellten Ausführungsform hat der Kopf eine Art Automatikfunktion, welche den Dübel über die Anpresskraft, welche durch die beschriebene Vollraumtechnik möglich ist, noch sicherer im Halt macht, insbesondere bei Verwendung in weniger harten Baustoffen oder bei Bohrloch-Plustoleranzen. Der so gestaltete Dübel liefert eine zusätzliche Drallspreizung, indem er sich beim Weiterdrehen der Schraube automatisch in Richtung Dübelhals bzw. Bohrlocheingang zieht und dabei die Spreizglieder aufstauchend drallartig um die eigene Achse windet, verformt und ausweitet, bis er schließlich im Hohlraum einen rosettenartigen Knoten bildet. In diesem Zusammenhang darf auf die schematische Darstellung in Fig. 5 verwiesen werden, in welcher ein erfindungsgemäßer Dübel, eingesetzt in einem Bohrloch, gezeigt ist. Es handelt sich hier um einen weniger harten Baustoff, nämlich Gasbeton, anhand dessen die mit dem Automatikkopf 2 erzielbare Drallung im Bereich des Spreizkörpers 3 dargestellt ist.

Bei der gezeigten Ausführungsform ist der erfindungsgemäße Dübel 1, wie bereits erwähnt, insgesamt, d.h. mit Automatikkopf 2, Spreizkörpergliedern 5 und Hals 4 gezeigt. In der dargestellten Ausführungsform sind das sechs Spreizkörperglieder mit jeweils angeformten Kopf- und Halssegmenten. Die Anzahl der Spreizglieder ist jedoch nicht auf sechs beschränkt, vielmehr können auch nur zwei, drei, vier und fünf oder auch acht solcher Spreizglieder zu einem Dübel zusammengesetzt werden.

Der Spreizkörperabschnitt 3 ist der spreizende Teil des Dübels 1. Er weist auf der Rückseite jene anteilige Kreisrundung auf, die dem jeweiligen Bohrlochdurchmesser einerseits und genau dem Sechstel des sechsteiligen Spreizkörpers entspricht. Mit anderen Worten, die sechs Basisflächen der sechs Spreizkörper ergeben zusammen im aufgerollten Zustand die 360° des Bohrlochumfanges, unabhängig davon, welchen Bohrlochdurchmesser die jeweilige Dübelgröße erfordert.

In Richtung der Dübelachse ergeben sich pro Pyramidenstumpf-Element zwei zur Achse hin zulaufende glatte Flächen. Dieser Teil des Spreizkörpers ist im Querschnitt, also an sich ein dreieckiger bzw. dreikantiger Körper mit kreisrundem Rückenteil. Auf der in der Dübelachse liegenden zentralen, gedachten Kante befindet sich eine genau berechnete Materialausnehmung respektive Kernbohrung im Ausmaß dessen, dass die dort entlangführende Schraube (maximale Schraubenabmessung) beim Eindrehen nicht abgedreht bzw. abgerissen wird und einen maximalen Spreizeffekt erzielt. Dieses Maß der Materialausnehmung lässt sich genau berechnen bzw. eintarieren und gewährleistet somit die physikalisch höchstmögliche Auszugsfestigkeit des Dübels.

Der Automatikkopf 2 ist indirekt über eine Distanzierung (Stege, Haut) an den Spreizkörperabschnitt 3 angebunden und wird in einem Stück extrudiert oder gespritzt, gegebenenfalls auch mit innen liegenden, vorzugsweise schraubenförmig verwundenen, gegebenenfalls auch allein mit solchen Verbindungsstegen beabstandet. Er hat die Aufgabe, die an die (Kopf-)Distanzierung anschließenden Spreizkörperglieder 5 je nach anwendungstechnischer Situation beim Weiterdrehen einer Schraube automatisch zu verformen. In allen Fällen ist Voraussetzung, dass die Schraube eine genügende Länge aufweist und also durch die volle Dübellänge einschließlich Kopf hindurchreicht und bis zum Anschlag weitergedreht wird.

Die Auszugsfestigkeit der Schraube ist dann so groß wie einerseits die Ausreißfestigkeit des Dübelmateriales oder andererseits die Ausbruchfestigkeit des Baustoffes selbst. Die überragende Ausziehfestigkeit lässt sich genau messen und vergleichen.

Der Automatikkopf 2 bildet einen geschlossenen, hier sechsteiligen, Körper, dessen Segmente 1 bis 6 untereinander hautartig verbunden sind, wobei im Bereich des Kopfes vorhandene bzw. ausgebildete Filmhäute um 0,05 mm stärker sind als die übrigen, im eigentlichen Spreizkörperabschnitt vorhandenen Filmhautverbindung im Ausmaß von 0,2 bis 0,5 mm Durchmesser.

Im Halsabschnitt 4 des Dübels sind lediglich Einlaufschrägen bzw. -keile vorgesehen. Hier soll der Dübel nicht spreizen, sondern beispielsweise den Hals der Schraube aufnehmen. Die Tiefe bzw. Länge des Halses ergibt sich aus der Zielstellung, einerseits die Aussenfläche des Mauerwerks nicht ausplatzen zu lassen und andererseits die Spreizung des Dübels in einer bestimmten Tiefe zu gewährleisten. Die Halslänge wird also vom Anwendungszweck des Dübels bestimmt, beispielsweise bei einem Rahmendübel.

Die Aussenseite des Halses ist am Halsbeginn pro Glied mit Lamellen 10 der Stärke von 0,2 bis maximal 0,5 mm ausgestattet. Diese Lamellen haben zwei Funktionen, sie begrenzen einerseits die Eindringtiefe des Dübels, so dass dieser nicht zu tief geraten kann, wenn das nicht beabsichtigt ist, und sie legen an die Bohrlochwandung bzw. in dem zu befestigenden Werkstück an, wenn zum Beispiel eine Durchsteckmontage oder ähnliches erforderlich ist, z. B. bei Holzleisten auf Beton etc.

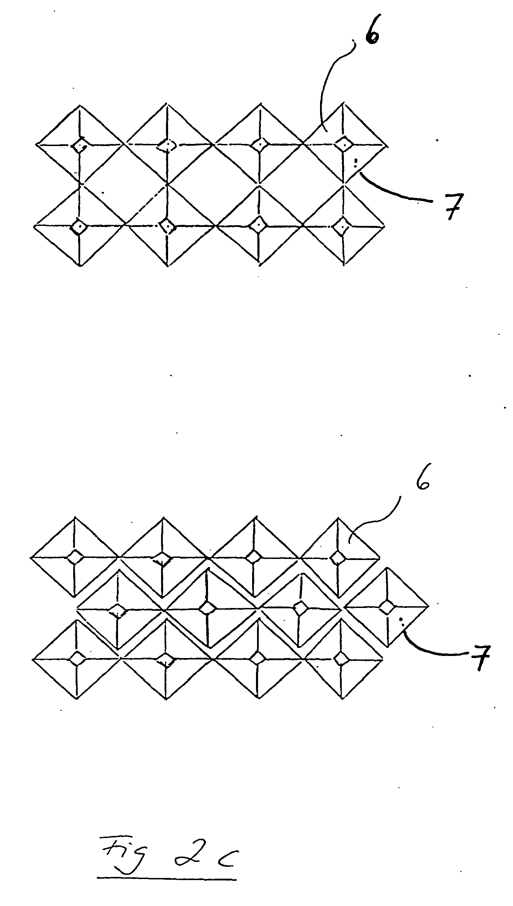

Bei der in Fig. 1 gezeigten Ausführungsform sind an den äußeren Segmenten a und f Elemente 14 und 15 vorgesehen, die miteinänder in Eingriff gebracht werden können, sobald die Segmente zu einem Dübelrohr aufgerollt sind. Dieser Zustand ist im Querschnitt in Fig. 3 dargestellt mit zwei etwas unterschiedlichen Arten von Schnappverbindungen a und b. Hier zeigt sich, dass der Dübel somit aus sechs pyramidenstumpfförmigen Segmenten gebildet wird, deren Basisflächen 7 sich zur Aussenoberfläche des Dübels vereinen und deren Stumpfflächen 8 die Innenoberfläche bilden.

In Fig. 2 sind erfindungsgemäße und wesentliche Merkmale bzw. Ausgestaltungen des Dübels gezeigt. Die Spreizkörperglieder 5 sind nämlich jeweils durch eine Vielzahl längs aneinander gereihter Pyramidenstümpfe 6 gebildet. Bei der in Fig. 2a gezeigten Ausführungsform sind alle Pyramidenstümpfe 6 in den Spreizkörpergliedern 5 parallel zueinander angeordnet und zwar derart, dass die Basisflächen 7 sowohl innerhalb der Spreizkörperglieder 5 als auch zwischen diesen Kante an Kante ausgeformt sind. Zur besseren Formbarkeit des Dübels 1 sind zwischen den Spreizkörpergliedern feine Häute 16 und/oder Stege 17 (wie in Fig. 1 veranschaulicht) ausgebildet.

Durch die Pyramidenstumpfform und die damit einhergehenden Freistellen auf dem Innenumfang 8 des Dübels im zusammengerollten Zustand wird der Eindrehwiderstand gegenüber einer Schraube reduziert Dennoch ist eine optimale Druckverteilung auf den Aussenumfang des Dübels 1 gewährleistet, da sich der auf die Stumpfflächen 8 durch eine Schraube oder einen Nagel ausgeübte Druck gleichmäßig auf die Basisflächen 7 und damit die Aussenfläche eines Dübels verteilt.

Fig. 2b zeigt eine weitere Variante der erfindungsgemäßen Ausgestaltung. Anders als bei Fig. 2a sind hier die Pyramidenstümpfe 6 bezüglich der Spreizkörperglieder 5 versetzt zueinander angeordnet. Durch diese Anordnung wird die Freiraumgröße reduziert, was u. U. den Eindrehwiderstand erhöht. Letzteres kann von Fall zu Fall wünschenswert sein.

In Fig. 2c sind die Pyramidenstümpfe 6 innerhalb der Spreizkörperglieder 5 über Eck aneinandergereiht. Erfolgt, wie bei der oberen Darstellung die Angliederung unter den Spreizkörpergliedern 5 ebenfalls über Eck, bilden sich beim zusammengerollten Dübel 1 relativ große Freiräume, was den Eindrehwiderstand stark reduziert. Allerdings ist bei dieser Ausführungsform die Druckverteilung auf die Aussenfläche des Dübels ebenfalls reduziert. Im Gegensatz dazu ist bei der unteren Abbildung eine größtmögliche Packungsdichte und damit gute Druckverteilung erreicht. Die Pyramidenstümpfe 6 sind innerhalb der Spreizkörperglieder 5 über Eck aneinander gereiht. Durch die diagonale Versetzung der Spreizkörperglieder 5 zueinander erfolgt die Verbindung der Basisflächen jedoch über die jeweiligen Kanten.

Durch die verschiedenen Ausgestaltungen lassen sich also Eindrehwiderstand und Druckverteilung variieren. Eine weitere Beeinflussung dieser Faktoren ist durch verschieden hohe Pyramidenstümpfe, Abschrägung der Stumpfflächen mit Neigung zur Basisfläche, wobei eine ansteigende Linie vom Dübelhals zum Dübelkopf hin verfolgt wird, möglich.

So weit der Dübel eine glatte Aussenseite im eigentlichen Spreizkörperabschnitt 3 und im Kopfabschnitt 2 aufweist, muss diese zur besseren Halterung aufgerauht sein, indem an solchen Bereichen eine lupenfeine, zarte, enge Rippung respektive Rillung in radialer Richtung angebracht sein kann. Diese aufrauhende Rippung bzw. Rillung verleiht dem Spreizkörperabschnitt und dem Kopf eine rauhe Oberfläche. Die Rippen sollen so ausgebildet sein, dass sie wie ganz feine Zähne gegen die Zugrichtung wirken. Diese Aufrauhung der Oberfläche der Spreizglieder korrespondiert mit der Rauhheit der Bohrlochwandung.

Ein solcher Dübel, im zusammengerollten und verbundenen Zustand, ist beispielsweise in Fig. 4 gezeigt. Hier ist zur Erhöhung der Spreizkraft im Spreizkörperabschnitt umfänglich ein Kranz aus Lamellen 10 ausgeformt. Im Halsbereich sind pro Segment keilförmige Zähne 9 angeordnet, welche ein Verdrehen des Dübels im Bohrloch verhindern sollen. Die Lamellen 10 am unteren Umfang des Halses wurden bereits unter Bezugnahme auf Fig. 1 erläutert.

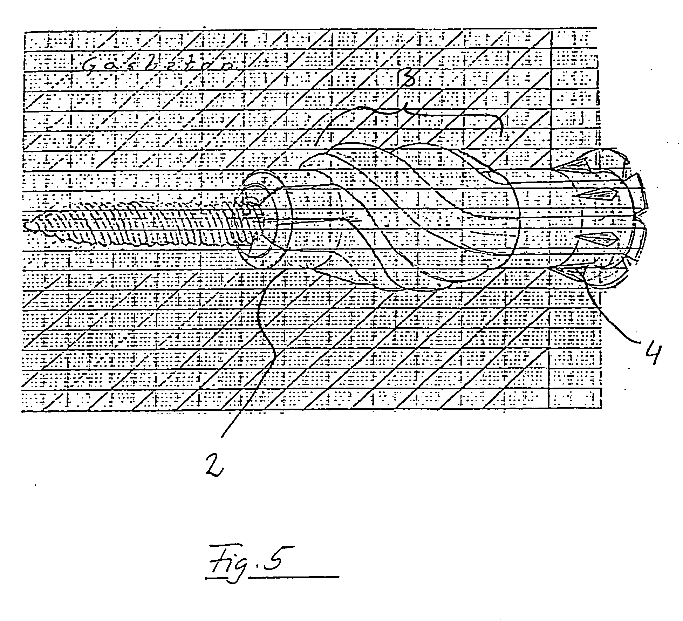

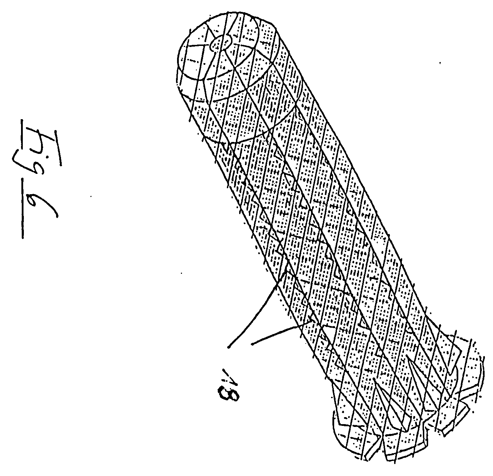

Nach Fig. 6 können die Spreizglieder auch mit einer Krallzahnleiste 18 versehen sein. Hierbei liegt nicht eine Zahnleiste vor, die über den eigentlichen Dübelkörper, wenn auch nur unwesentlich, hinaussteht, sondern liegen die Zähne an der Kante des Spreizkörpergliedes unmittelbar. Bei einer Zahnform im Sinne eines gleichschenkeligen Dreiecks wird dadurch eine 100 % längere Kante erzielt gegenüber der nicht gezahnten Kante. Die Zähne dürfen jedoch nur eine Verlängerung der Kante und damit nur einen unbedeutenden Hohlraum und kaum eine Verringerung der Haltekraft des Dübels im Baustoff darstellen. Durch diese Krallzahnleisten wird erreicht, dass sich der Dübel in weiteren Baustoffen in besonderem Maße verkrallt und in Verbindung mit den Spreizkräften der Vollräumspreizung des erfindungsgemäßen Dübels eine extrem hohe Auszugsfestigkeit erreicht. Diese Zahnleisten liegen in der Ausgangsstellung parallel zur Dübelachse, bei drallanteiliger Verwindung sind diese Zahnleisten Bestandteil der Spreizglieder. In der Ausgangslage weisen diese Krallzahnleisten 18 also in die Tiefe des Bohrloches. Wenn dem Dübel bei weiterem Eindrehen der Schraube ein Rechtsdrall durch das Zurückziehen des Kopfes 2 verliehen wird, verändern die Zahnleisten ihre Lage und kommen mit den zugehörigen Spreizkörpergliedern in eine drallartige, verwundene Schräglage. Sie erzielen in nicht genügend harten Baustoffen eine besonders hohe angemessene Auszugsfestigkeit. Eine weitere Ausführungsform der Oberflächengestaltung eines erfindungsgemäßen Dübels ist in Fig. 7 gezeigt, bei dem die Aussenfläche teilweise mit Zahnleisten 9 versehen ist. Auf der Scheitelhöhe des anteiligen kreisrunden Rückens aber auch an der Kante kann diese axial verlaufende Zahnleiste angebracht sein, die eine entsprechende Drehsicherung des Dübels beim Einführen der Schraube ergibt. Diese Zahnleisten beschränken sich jeweils auf den Spreizabschnitt des Spreizgliedes. Sie können wahlweise auf jedem Spreizglied oder zum Beispiel auf jedem zweiten angebracht sein. Diese Zahnleisten sind so ausgebildet, dass sie in das Vollraumvolumen des Vollraumdübels nicht nachteilig eingreifen. Dieses wird im Gegenteil sogar um eine Spur erhöht. Diese Zähnchen weisen eine Höhe von ca. 0,2 bis 0,3 mm auf.

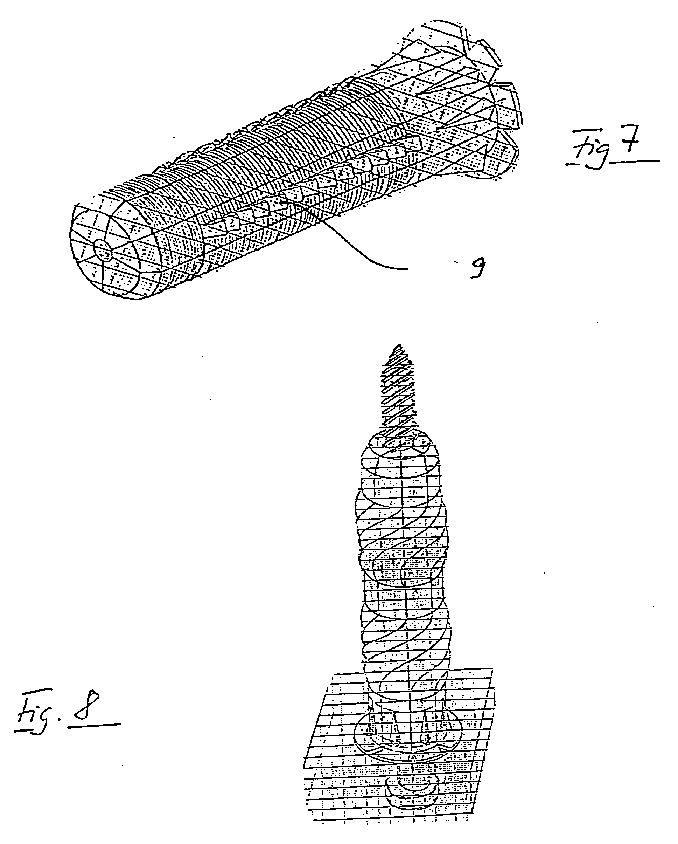

Der Oberflächengestaltung bzw. der Variation der Haltekraft des Dübels im Bohrloch sind damit keine Grenzen gesetzt, da auch Mischformen der vorher beschriebenen Ausgestaltungen möglich sind. In Fig. 8 ist eine weitere Ausführungsvariante eines erfindungsgemäßen Dübels dargestellt, bei dem zwei Köpfe bzw. Automatikköpfe vorgesehen sind. Dabei ist unter Kopf das Ende eines ersten Dübelabschnittes und eines zweiten Dübelabschnittes zu verstehen. Die Dübelabschnitte weisen unterschiedliche Innendurchmesser auf.

Die Pyramidenstumpfform ist nicht auf eine solche mit quadratischer Basis beschränkt. Es können auch sechskantige bzw. sechseckige Pyramidenstümpfe bzw. solche Querschnitte davon verwendet werden. Als Materialien für Pyramidendübel kommen thermoplastische sowie kaltverformbare Stoffe, ebenso Metalle und Kombinationen derselben in Frage. Für die Thermoplast-Verarbeitung, für die Kaltverformung und in der Metalldübelherstellung (sowie Kombinationen all dieser Stoffe) sind jeweils spezielle Produktionstechniken anzuwenden. In allen Fällen ist bei entsprechenden Stückzahlen die Endlosverarbeitung und das Fließbandverfahren anzustreben bzw. von den technischen und ökonomischen Gestaltungsmöglichkeiten von besonderem Vorteil.

Mit dem erfindungsgemäß ausgestalteten Dübel auf Basis von Pyramidenstümpfen ist konstruktiv und qualitativ eine überragende Produktgestaltung möglich. Bei allen Ausführungsformen wird ein wesentlich höherer Anpressdruck im Bohrloch und dementsprechend eine höhere Auszugsfestigkeit erzielt. Durch die Pyramidenstümpfe wird eine maximale Druckverteilung auf die gesamte Spreizkörperoberfläche erzielt. Ein Schraubenbruch wird vermieden.

## Patentansprüche

1. Dübel (1) mit einem Spreizkörper (3), einem vom Spreizkörper (3) beabstandeten Dübelkopf (2) und einem Dübelhals (4), der wenigstens über den Bereich seines Spreizkörpers (3) aus wenigstens zwei sich längs erstreckenden Spreizkörpergliedern (5) gebildet ist, wobei die Spreizkörperglieder (5) elastisch miteinander verbunden sind und einen im Wesentlichen pyramidenstumpfförmigen Querschnitt (6) aufweisen, deren Basisflächen (7) den Aussenumfang (7') und deren Stumpfflächen (8) den Innenumfang (8') des Dübels (1) bilden, **dadurch gekennzeichnet, dass** die Spreizkörperglieder (5) durch eine Vielzahl längs aneinander gereihter Pyramidenstümpfe (6) gebildet sind.

2. Dübel nach Anspruch 1, **dadurch gekennzeichnet, dass** 3, 4, 5, 6, 7 oder 8 zusammenhängende Spreizkörperglieder (5) vorgesehen sind.

3. Dübel nach Anspruch 1 oder 2, **dadurch gekennzeichnet, dass** die Pyramidenstümpfe (6) bezüglich der Spreizkörperglieder (5) parallel angeordnet sind.

4. Dübel nach Anspruch 1 oder 2, **dadurch gekennzeichnet, dass** die Pyramidenstümpfe (6) bezüglich der Spreizkörperglieder (5) versetzt zueinander angeordnet sind.

5. Dübel nach Anspruch 1 oder 2, **dadurch gekennzeichnet, dass** die Pyramidenstümpfe (6) innerhalb eines Spreizkörpergliedes (5) jeweils mit einer Ecke der Basisflächen (7) mit angrenzenden Pyramidenstümpfen zusammenstoßen oder mit diesen verbunden sind.

6. Dübel nach Anspruch 5, **dadurch gekennzeichnet, dass** die Pyramidenstümpfe (6) bezüglich der Spreizkörperglieder (5) parallel angeordnet sind.

7. Dübel nach Anspruch 5, **dadurch gekennzeichnet, dass** die Pyramidenstümpfe (6) bezüglich der Spreizkörperglieder (5) versetzt zueinander angeordnet sind.

8. Dübel nach Anspruch 1, **dadurch gekennzeichnet, dass** innerhalb eines Spreizkörpergliedes (5) die Pyramidenstümpfe (6) doppelseitig gegenläufig angeordnet sind.

9. Dübel nach Anspruch 1, **dadurch gekennzeichnet, dass** die Pyramidenstümpfe (6) in den Spreizkörpergliedern (5) derart angeordnet sind, dass sie spiralförmig verlaufen.

10. Dübel nach einem der Ansprüche 1 oder 9, **dadurch gekennzeichnet, dass** die Pyramidenstümpfe (6) in Längsrichtung eine unterschiedliche und/oder alternierende Höhe aufweisen.

11. Dübel nach einem der Ansprüche 1 oder 9, **dadurch gekennzeichnet, dass** die Stumpffläche (8) der Pyramidenstümpfe (6) in Längsrichtung ansteigend abgeschrägt ist.

12. Dübel nach einem der Ansprüche 1 bis 11, **dadurch gekennzeichnet, dass** die Stumpfflächen (8) eine Zahnung aufweisen.

13. Dübel nach einem der Ansprüche 1 bis 12, **dadurch gekennzeichnet, dass** die Pyramidenstümpfe (6) eines jeden Spreizkörpergliedes (5) untereinander elastisch verbunden sind.

14. Dübel nach einem der Ansprüche 1 bis 13, **dadurch gekennzeichnet, dass** jedes Spreizkörperglied (5) über einen Steg (17), der hautförmig ausgebildet ist, zusätzliche rippenartige Stege aufweist oder nur aus schraubenförmig verwundenen Stegen aufgebaut ist, mit dem Kopf (2) verbunden ist und gleichzeitig diesen von den Spreizkörpergliedern (5) in Abstand hält (Freistellung), wobei der Kopf (2) ebenso viele Segmente aufweisen kann, wie Spreizkörperglieder (5) vorhanden sind.

15. Dübel nach einem der Ansprüche 1 bis 14, **dadurch gekennzeichnet, dass** der Dübel als Doppelstock-Dübel ausgebildet ist.

16. Dübel nach einem der Ansprüche 1 bis 15, **dadurch gekennzeichnet, dass** der Dübelhals (4) über eine Schraubeneinlaufschräge (12) verfügt und feinst aufgerauht ist oder feine Zahnungen oder Rippchen aufweist.

17. Dübel nach einem der Ansprüche 1 bis 16, **dadurch gekennzeichnet, dass** auf seinem Aussenumfang (7') im Spreizkörperbereich (3) eine feine Ziselierung in Form eines Fingerabdrucks, von Zahnleisten (9), Lamellen (10) und/oder Krallzähne (18) umfänglich und/oder in Längsrichtung vorgesehen sind.

18. Dübel nach einem der Ansprüche 1 bis 17, **dadurch gekennzeichnet, dass** er aus thermoplastischen Kunststoffen oder aus kaltverformbaren Stoffen und/oder Metall/Stahl sowie Kombination dieser Materialien gefertigt ist.

19. Verfahren zur Herstellung eines Dübels nach einem der Ansprüche 1 bis 18 aus einer Flachform des Dübels aus Metallen, wie Messing, Aluminium, oder verzinktem, gelb chromatisierten Stahl, **dadurch gekennzeichnet, dass** in der Flachform Aussparungen vorgesehen werden, in welche die Pyramidenstümpfe (6) eingesetzt oder auf die beim Stanzen hergestellten beweglichen Grundplatten aufmontiert (geklebt oder geschweißt etc.) werden.

20. Verfahren nach Anspruch 19, **dadurch gekennzeichnet, dass** dabei auch nichtmetallische Materialien eingesetzt werden, z. B. aus Keramik und/oder Kohlefaser, Glasfaser u.a.m.

## Claims

1. Dowel (1) with an expanding body (3), a dowel head (2) spaced apart from the expanding body (3) and a dowel neck (4), that at least over the area of its expanding body (3) is formed from at least two expanding body elements (5) extending longitudinally, with the expanding body elements (5) being resiliently connected to each other and having a cross section (6) essentially in the shape of a pyramid frustum the base surfaces (7) of which form the outer circumference (7') of the dowel (1) and the frustum surfaces (8) of which form the inner circumference (8') of the dowel (1), **characterized in that** the expanding body elements (5) are formed by a plurality of pyramid frustums (6) arranged in a row along each other.

2. Dowel according to Claim 1, **characterized in that** 3, 4, 5, 6, 7 or 8 interconnected expanding body elements (5) are provided.

3. Dowel according to Claim 1 or 2, **characterized in that** the pyramid frustums (6) are arranged in parallel relative to the expanding body elements (5).

4. Dowel according to Claim 1 or 2, **characterized in that** the pyramid frustums (6) are arranged offset relative to each other with respect to the expanding body elements (5).

5. Dowel according to Claim 1 or 2, **characterized in that** the pyramid frustums (6) within an expanding body element (5) each abut with one corner of the base surfaces (7) against the adjacent pyramid frustums or are connected with same.

6. Dowel according to Claim 5, **characterized in that** the pyramid frustums (6) are arranged in parallel relative to the expanding body elements (5).

7. Dowel according to Claim 5, **characterized in that** the pyramid frustums (6) are arranged offset relative to each other with respect to the expanding body elements (5).

8. Dowel according to Claim 1, **characterized in that** within an expanding body element (5) the pyramid frustums (6) are arranged running counter to each other on both sides.

9. Dowel according to Claim 1, **characterized in that** the pyramid frustums (6) are arranged in the expanding body elements (5) in such a way that they run in the shape of a spiral.

10. Dowel according to one of Claims 1 or 9, **characterized in that** the pyramid frustums (6) have a different and/or alternating height in the longitudinal direction.

11. Dowel according to one of Claims 1 or 9, **characterized in that** the frustum surface (8) of the pyramid frustums (6) is increasingly chamfered in the longitudinal direction.

12. Dowel according to one of Claims 1 to 11, **characterized in that** the frustum surfaces (8) have a toothing.

13. Dowel according to one of Claims 1 to 12, **characterized in that** the pyramid frustums (6) of each expanding body element (5) are resiliently connected to each other.

14. Dowel according to one of Claims 1 to 13, **characterized in that** each expanding body element (5) is connected by a web (17), which is formed in the shape of a skin, has additional rib-type webs or is constructed only of webs wound in the shape of a screw, to the head (2) and at the same time is held spaced apart (clearance) from the expanding body elements (5), with it being possible for the head (2) to also have as many segments as there are expanding body elements (5) present.

15. Dowel according to one of Claims 1 to 14, **characterized in that** the dowel is formed as a double-body dowel.

16. Dowel according to one of Claims 1 to 15, **characterized in that** the dowel neck (4) has a screw inlet chamfer (12) and has superfine roughing or fine toothing or ribs.

17. Dowel according to one of Claims 1 to 16, **characterized in that** a fine chasing in the form of a fingerprint, of toothed serrations (9), laminas (10) and/or claw teeth (18) is provided on the outer circumference (7') of said dowel in the expanding body area (3) and running circumferentially and/or in the longitudinal direction.

18. Dowel according to one of Claims 1 to 17, **characterized in that** said dowel is manufactured from thermoplastic plastics or cold-formable materials and/or metal/steel as well as a combination of these materials.

19. Method for the manufacture of a dowel according to one of Claims 1 to 18 from a flat shape of the dowel from metals such as brass, aluminum or galvanized, yellow chromated steel, **characterized in that** cutouts are provided in the flat shape in which the pyramid frustums (6) are set or mounted (bonded or welded, etc.) on the moving base plates formed by stamping.

20. Method according to Claim 19, **characterized in that** non-metallic materials can also be used, e.g. of ceramics and/or carbon fibre, glass fibre, etc.

## Revendications

1. Cheville (1) avec un corps d'écartement (3), une tête de cheville (2) disposée à distance du corps d'écartement (3) et un col de cheville (4) qui est formé par au moins deux membres (5) du corps d'écartement qui s'étendent dans le sens de la longueur au moins dans la zone de son corps d'écartement (3), les membres (5) du corps d'écartement étant reliés ensemble par une liaison élastique et comportant une section (6) sensiblement en forme de pyramide tronconique dont les bases (7) forment le périmètre externe (7') et les faces tronconiques (8), le périmètre interne (8') de la cheville (1), **caractérisée en ce que** les membres (5) du corps d'écartement sont formés par une pluralité de pyramides tronconiques (6) juxtaposées dans le sens de la longueur.

2. Cheville selon la revendication 1, **caractérisée en ce que** 3, 4, 5, 6, 7 ou 8 membres (5) connexes du corps d'écartement sont prévus.

3. Cheville selon la revendication 1 ou 2, **caractérisée en ce que** les pyramides tronconiques (6) sont disposées parallèlement aux membres (5) du corps d'écartement.

4. Cheville selon la revendication 1 ou 2, **caractérisée en ce que** les pyramides tronconiques (6) sont décalées les unes par rapport aux autres par rapport aux membres (5) du corps d'écartement.

5. Cheville selon la revendication 1 ou 2, **caractérisée en ce que** les pyramides tronconiques (6) au sein d'un membre (5) du corps d'écartement sont apposées chacune à des pyramides tronconiques adjacentes ou reliées à celles-ci par un angle des bases (7).

6. Cheville selon la revendication 5, **caractérisée en ce que** les pyramides tronconiques (6) sont disposées parallèlement aux membres (5) du corps d'écartement.

7. Cheville selon la revendication 5, **caractérisée en ce que** les pyramides tronconiques (6) sont décalées les unes par rapport aux autres par rapport aux membres (5) du corps d'écartement.

8. Cheville selon la revendication 1, **caractérisée en ce qu'**à l'intérieur d'un membre (5) du corps d'écartement les pyramides tronconiques (6) sont disposées à contre-sens sur les deux côtés.

9. Cheville selon la revendication 1, **caractérisée en ce que** les pyramides tronconiques (6) sont disposées dans les membres (5) du corps d'écartement de manière à être spiralées.

10. Cheville selon l'une quelconque des revendications 1 ou 9, **caractérisée en ce que** les pyramides tronconiques (6) sont de différentes hauteurs et/ou de hauteur alternante dans le sens de la longueur.

11. Cheville selon l'une quelconque des revendications 1 ou 9, **caractérisée en ce que** la face tronconique (8) des pyramides tronconiques (6) présente un biseau ascendant dans le sens de la longueur.

12. Cheville selon l'une quelconque des revendications 1 à 11, **caractérisée en ce que** les faces tronconiques (8) présentent une denture.

13. Cheville selon l'une quelconque des revendications 1 à 12, **caractérisée en ce que** les pyramides tronconiques (6) de chacun des membres (5) du corps d'écartement sont reliées élastiquement entre elles.

14. Cheville selon l'une quelconque des revendications 1 à 13, **caractérisée en ce que** chaque membre (5) du corps d'écartement est relié à la tête (2) par l'intermédiaire d'une languette (17) qui est conformée en forme de membrane, comporte des languettes supplémentaires en forme de nervures ou est simplement construite à partir de languettes hélicoïdales, et tient en même temps cette tête (2) à l'écart des membres (5) du corps d'écartement (position libérée), la tête (2) pouvant comporter autant de segments qu'il y a de membres (5) du corps d'écartement.

15. Cheville selon l'une quelconque des revendications 1 à 14, **caractérisée en ce que** la cheville est conformée en forme de cheville à deux étages.

16. Cheville selon l'une quelconque des revendications 1 à 15, **caractérisée en ce que** le col (4) de la cheville est pourvu d'une surface inclinée (12) pour l'insertion de la vis et présente une surface finement rugueuse ou de fines dentures ou nervures.

17. Cheville selon l'une quelconque des revendications 1 à 16, **caractérisée en ce que** sur son périmètre extérieur (7'), dans la zone du corps d'écartement (3), un fin ciselage sous forme d'empreinte digitale, de rangées de dents (9), de lamelles (10) et/ou de griffes (18) est prévu sur le périmètre et/ou dans le sens de la longueur.

18. Cheville selon l'une quelconque des revendications 1 à 17, **caractérisée en ce qu'**elle est réalisée en matières plastiques thermoplastiques ou en matières déformables à froid et/ou en métal/acier ainsi qu'en une combinaison de ces matériaux.

19. Procédé de réalisation d'une cheville selon l'une quelconque des revendications 1 à 18 à partir d'une forme plate de la cheville en métal, tel que le laiton, l'aluminium ou l'acier zingué, jaune chromatisé, **caractérisé en ce que** l'on prévoit des évidements dans la forme plate dans lesquels on insère les pyramides tronconiques (6) ou dans lesquels on les monte (colle, soude, etc.) sur des embases mobiles réalisées lors du découpage.

20. Procédé selon la revendication 19, **caractérisé en ce que** l'on utilise également des matériaux non métalliques, p. ex. en céramique et/ou en fibre de carbone, de verre et autres.
